Europäisches Patentamt

European Patent Office

Office européen des brevets

(19)

(11) Publication number: **0 131 072**
**B1**

(12) **EUROPEAN PATENT SPECIFICATION**

(45) Date of publication of patent specification: **07.09.88**

(51) Int. Cl.⁴: **B 23 K 9/06**

(21) Application number: **83303672.6**

(22) Date of filing: **24.06.83**

(54) **Micro-arc welding/brazing of metal to metal and metal to ceramic joints.**

(43) Date of publication of application:
**16.01.85 Bulletin 85/03**

(45) Publication of the grant of the patent:
**07.09.88 Bulletin 88/36**

(84) Designated Contracting States:
**DE FR GB IT SE**

(56) References cited:
**FR-A-2 048 968**
**FR-A-2 303 632**
**FR-A-2 480 647**
**GB-A-2 096 802**
**US-A-4 034 212**
**US-A-4 103 141**
**US-A-4 249 062**

(73) Proprietor: **Cann, Gordon L.**
**P.O. Box 279**
**Laguna Beach, CA 92652 (US)**

(72) Inventor: **Cann, Gordon L.**
**P.O. Box 279**
**Laguna Beach, CA 92652 (US)**

(74) Representative: **Dixon, Donald Cossar et al**
**Gee & Co. Chancery House Chancery Lane**
**London WC2A 1QU (GB)**

Courier Press, Leamington Spa, England.

# 0 131 072

**Description**

This invention relates to micro-arc welding/brazing of metal to metal and metal to ceramic joints.

Machinery and electronic devices are becoming more and more sophisticated at an extremely rapid rate. An important element of this sophistication is the need to join metal to metal and metal to ceramic parts by more reliable and reproducible methods, often at high temperature (over 1000°C) and often without the use of flux or other chemical cleaning processes. A proliferation of techniques have been developed to meet these needs.

These include but are not limited to:

—high temperature vacuum and inert gas furnace brazing
—electron beam brazing and welding
—laser beam brazing and welding
—spot welders and brazers
—ultrasonic bonders
—heli-arc machines
—acetylene torches
—mechanical bonding using electromagnetic forces
—soldering irons and guns
—plasmatrons or plasmajets
—ion beams.

For the most part, these developments have been empirical. Many of them also have one or more of the following undesirable characteristics:

—require specialized, expensive equipment
—require highly trained personnel to operate, i.e. cannot be machine programmed
—do not give reproducible results
—require the use of chemical cleaning agents which can contaminate critical components and limit the lifetime of the device
—each new joint must be developed through the use of many samples which can be very expensive and time consuming
—lack of temperature control can cause unacceptable thermal stresses, unacceptable recrystallization in components, damage to neighboring components.

In any brazing or welding operation, some provision must be made to accomplish the following processes:

i) mechanically join or position the parts to be brazed or welded
ii) choosen an optimum braze material
iii) properly position the right amount of braze and weld material or arrange to feed it at the proper rate during brazing or welding
iv) establish a non-corrosive atmosphere
v) clean, selectively if possible, the surfaces that are to be joined
vi) if the parts are to be brazed, wet or coat the appropriate surfaces with a thin layer of material, usually the same as the braze material
vii) heat the desired surfaces to the optimum temperature at the optimum rate
viii) ensure that the braze or weld material flows to the desired location
ix) cool the joint at an optimum rate.

Ensuring that the steps outlined above are done in the proper sequence is extremely important in most cases. For instance, if the braze melts and flows before the surfaces are cleaned and wetted, it will ball up and often fall off of the metal parts or move to some undesirable position. There is little or no problem associated with accomplishing steps *i* and *iv* in proper sequence. However, steps *v* through *viii* are often all accomplished by applying heat to the joint. Ensuring that these steps are effected in the proper sequence becomes one of the prime requirements of the heating system. There is, however, some flexibility in the sequencing of these steps.

Besides ensuring the proper time sequencing of the steps noted above, the steps are strongly coupled so that any change in one step could strongly influence any of the other steps. For instance, heating in a vacuum furnace rather than a hydrogen furnace could alter the decisions that must be made to properly accomplish steps *ii*, *v*, *vi*, *viii*, and *ix*.

Until now, the physics and physical processes that determine the multiple interactions and proper sequencing of events during brazing or welding often have not been identified or even well understood. This is especially true in cases where an electrical discharge is used to supply the heat, because of the notorious "perversity" of arc discharges. Great strides, however, have been made in understanding and optimizing arc electrical discharge phenomena over the past 20 years. Many of these developments were accomplished in areas of technology not famililar to the average arc welding expert, e.g. space propulsion engines. Often, these developments were not reported in the open literature, and hence this information was confined to a small group of plasma physicists. This can account for the almost universal use of

2

"primitive" arc devices and technology in most present day heli-arc operations, as well as heli-arcing being more a "black art" rather than a well established technological process.

As stated above, rapid developments in other areas of technology as well can have profound implications towards the development of a scientific approach to welding and brazing. Specifically, the significant advances in our understanding of physi- and chemi- sorbed layers and how to control them, have been made by scientists working in the space program. High speed, high capacity computers have made the solution of complicated heat-transfer problems routine. The development of solid state devices and associated electronics now permit better than 1% control of current, voltage or power in direct current power supplies.

GB—A—2 096 802 discloses a method of pulsed direct current arc welding with a feedback control system wherein the duty cycle of constant amplitude current pulses supplied by a power supply is controlled in response to resistance sensed at an arc gap to maintain a constant time-averaged power flow to work pieces which are welded. The feedback control system includes a voltage sensor, a high-low regulator, and a duty cycle signal generator. This pulsed DC arc welding is especially useful with a type of pulsed DC arc welding wherein the ratio of peak current to maintenance current is maintained at a selected high value and the current is cycled in a time duration whereby oxides on the surface of the work pieces are dissipated when making the weld.

It is an object of this invention to provide a precisely controlled method for welding and brazing small components.

It is a further object of the invention to provide a method for welding and brazing using arc currents which are precisely controlled so as to permit fusion or bonding at a specified limited area which can be made smaller and can be more accurately predetermined than had been hithertofore possible.

It is a further object of the invention to provide such a method while minimizing the thermal stresses which would normally occur outside a small working area.

It is a further object of the invention to provide a method for arc welding or brazing wherein physical properties of the arc are pre-calculated in order to provide a stabilized arc at a minimum of temperature and current.

It is a further object of the invention to provide a method wherein an arc is stabilized by controlling the arc current in accordance with the physical properties of the arc and by providing a vortex gas flow around the arc.

It is a further object of the invention to provide such a method wherein the arc is maintained in a stabilized condition, even at relatively low current values, by maintaining a vortex in an enveloping gas which has high-speed flow characteristics.

In accordance with the invention, I provide a method for welding a material at an anode junction with an arc from a cathode rod so that at least some of the material is melted and flows together to form a unified weld, comprising the steps of

(a) determining an effective size of the portion of the material which is to be heated to a desired temperature during the heating, by measurement of the quantities $M$, $A_r$, $A_c$ and $L_{eff}$;

$M$=mass of material that must be raised to the desired temperature;

$A_R$=surface area of material that will be radiating power;

$A_C$=cross-sectional area through which heat is conducted away from the joint material; and

$L_{eff}$=effective conduction length, namely the average length over which heat is conducted;

(b) determining the current level necessary to heat the material to the desired temperature over said effective size of the joint at a desired gas pressure range, said current level being determined through calculation of the formula

$$I = \frac{A_R \, \varepsilon \, \alpha \, T_M{}^4 + A_c \phi[M/L_{eff}]}{\delta \, V_I + X_w}(1-\alpha) \, (1-\tau\alpha^4) + \alpha(1-\tau\alpha),$$

wherein:

$I$=the current level;

$\varepsilon$=emissivity of the material;

$\alpha$=the ratio of power conducted by the arc to total power losses at an attachment point of said anode juncture;

$T_M$=cross-sectional area through which heat is conducted away from the joint material;

$\phi$=heat flux potential for the material;

$\tau\alpha = Ta/T_M$ where $Ta$=ambient temperature in °K;

$\delta$=parameter defining a proportion of electron energy discharged at the anode attachment point of said material;

$V_I$=ionisation potential of gas or vapor near said attachment point; and

$X_w$=work function of work material, that is energy absorbed by electrons upon entering the material;

(c) maintaining said current level within the range of 10 milliamps to 10 amps;

(d) determining a pressure level within said gas pressure range necessary to maintain a stable arc at the determined current level and obtain the desired penetration of the weld by calculation of the formula:

$$atm = \frac{P}{Pa} = \frac{kT_M}{Pa\, q_{ea}} \left[ \frac{27}{4} \quad \frac{I}{\varepsilon_0\, V_i 3/2A_R} \sqrt{\frac{m}{2|e|}} \right]^{1/2}$$

wherein:

atm = atmospheres of pressure;

K = Boltzmann constant;

P = pressure level;

Pa = atmospheric pressure;

$q_{ea}$ = cross-section for atom-electron collisions;

$\varepsilon_0$ = capacitivity of vacuum;

m = mass of one electron; and

$|e|$ = electron charge of the electron;

(e) determining a time $t_w$ for which the current must flow in order to heat the material at the effective size of said portion to obtain the desired temperature by calculation of the formula:

$$t_w = \frac{\sum_i M_i (h_M)_i \tau_w}{A_R\, \varepsilon\, \alpha\, T_M^4 + A_c \phi [M/L_{eff}]}$$

wherein:

$M_i$ = mass of species, i; and

$(h)_i$ = enthalpy of species i, including heat of fusion where appropriate;

(f) determining a cathode temperature $T_w$ necessary to maintain thermionic emission through calculation of the formula:

$$T_w = \int_0^N dx\, \frac{1}{(1-\alpha)(1-x^4) + \alpha(1-x)}$$

where N is the proportion of equilibrium temperature selected as a minimum working temperature;

(g) determining a diameter $d_k$ of the cathode rod necessary to maintain the cathode temperature $T_k$ at said value, said diameter being determined by repeated calculation of the formula:

$$T_k/T_{eq} = \frac{(1+\gamma^4)^{1/4}\gamma\, \exp\{(1+\gamma^4)\xi_k\}}{[1+\gamma^4\, \exp\{(1+\gamma^4)4\xi_k\}]^{1/4}}$$

where

$\gamma = T_a/T_{eq}$;

$\xi_k = t_k/t_{ref}$;

$T_a$ = ambient temperature;

$$T_{eq} = \left[ \frac{4I^2}{\pi^2 d_k^3}\, \frac{d\rho}{dT}\, \frac{1}{\sigma \dfrac{d\varepsilon}{dT}} \right]^{1/4};$$

$\rho$ = resistivity of cathode;

$$= \frac{d\rho}{dT}\, T \text{ (linearly dependent on the absolute temperature)};$$

$\sigma$ = Stefan-Boltzmann constant for black body radiation;

$$t_{ref} = \left[ \frac{\pi d_k^2}{4I} \right]^2 p_k\, \frac{C_p}{\dfrac{d\rho}{dT}}$$

$\rho_k$ = density of cathode material; and

$C_p$ = specific heat of cathode material;

(h) positioning the material to be heated in a jig so that the portion of the material which is to be elevated to the desired temperature is in close proximity to a cathode of the determined diameter;

(i) establishing the determined pressure of gas at the portion of the material which is to be elevated to the desired temperature;

(j) applying electrical potential across the cathode and the material to be heated to the desired temperature so that the desired current flows through the cathode for a desired amount of time, the current flowing in an arc between the cathode and the material which is to be heated to the desired temperature; and

(k) maintaining the current flowing through the cathode in a stable condition.

The fused joint may be surrounded by an inert enveloping gas during the fusion and the gas may be caused to flow at a high-speed vortex with speeds near the center of the vortex approaching MACH one.

Embodiments of the present invention will now be described, by way of example, with reference to the accompanying drawings in which:—

Figure 1 shows a graphical display of non-dimensional time for heating the work vs. ratio of thermal conduction heat loss to total heat loss for a typical material, in accordance with the present invention;

Figure 2 shows a graphical display of rod diameters vs. current for different times to heat the rod in accordance with the invention;

Figure 3 shows a graphical display of rod diameters vs. current for different rod temperatures in accordance with the invention;

Figure 4 is a combined graphical display showing the information of Figures 2 and 3;

Figure 5 shows a jig used to braze two wires within an insulator according to one aspect of the invention;

Figure 6 shows an arrangement for joining two wires in an insulator prior to a brazing operation according to the present invention;

Figure 7 is a cross-sectional view taken along section 7—7 of Figure 6;

Figure 8 shows the arrangement of Figure 6 after having been brazed in the jig of Figure 5;

Figure 9 shows a jig for welding two nichrome wires together in accordance with the present invention;

Figure 10 is a top view showing details of the jig of Figure 9;

Figure 11 is a cross-sectional view, taken along section 11—11 of Figure 10;

Figure 12 shows two nichrome wires encased in a sheath to be joined in accordance with the present invention;

Figure 13 shows the nichrome wires of Figure 12 after having been joined in the jig of Figure 9;

Figure 14 shows a jig for brazing a lug onto an insulated wire in accordance with the present invention;

Figure 15 shows details of the jig of Figure 14 showing a mounting assembly for brazing the lug; and,

Figures 16 and 17 show the lug before and after, respectively, being brazed in the jig of Figure 14.

The present invention takes advantage of the fact that physical properties of an arc, as well as the physical properties of materials being heated by an arc for thermal fusion (welding and/or brazing) can be fairly accurately calculated. While these calculations must be performed for each type of job, most commercial applications of thermal fusion involve repeat operations in which a large number of (preferably) identical parts are produced.

In order to minimize the size of a fused portion of the material to be joined (hereinafter called "work"), the arc current is maintained at a level slightly above a pre-determined minimum current required to melt the fusion materials and to raise the temperature of the materials to be fused to the desired temperature at the location of the fusion. The fusion materials normally are either a braze solder or the puddle portion (melted material) of the weldment. In order to use this minimum current level, it is necessary to provide the current in an environment which would tend to stabilize the arc, rather than permit the arc to destabilize and rapidly move around a desired arc attachment point at the work.

As with conventional arc welding, an arc is discharged from a welding rod or cathode to an anode attachment point on the work. Sufficient current is caused to flow through the cathode and onto the anode attachment point to stabilize the arc and to cause thermionic emission from the cathode. In order to minimize this current, it is necessary to determine five parameters which must be properly controlled in order to accomplish any specific welding or brazing job. These quantities are:

1) the discharge current, $I$;

2) the ambient pressure of inert gas, $p$;

3) the time over which the discharge current flows, $t$;

4) the cathode diameter, $d_k$; and,

5) the temperature of the cathode, $T_k$.

These quantities are functions of the physical properties of the material to be welded or brazed, of the ambient inert gas, and of the size and properties of the materials involved in the braze or weld.

In conventional arc welding techniques, the arc is stabilized by maintaining a relatively high discharge current. High discharge current ensures that the arc will be stable at atmospheric pressure with a large variety of cathode diameters. The materials welded by conventional techniques are usually relatively thick, thereby eliminating the need to control the time over which the discharge current flows.

Because of the large current flow of conventional welding apparatus, it is not necessary to maintain the current in a relatively smooth or predictable wave form. That is significant because the electrical impedance across the arc is widely variable, thus resulting in wildly erratic fluctuation in arc current over short time periods, even though the average current value remains constant.

In order to reduce the arc current level, it is necessary to eliminate the considerable fluctuations which normally occur in arc discharge devices. This is facilitated by the fact that significantly lower currents are being used. While stable current generators are readily commercially available, it is possible to construct such a stable current supply by using a high voltage power source capable of supplying current at at least the desired levels, combined with a bank of resistors such as an adjustable carbon pile. The carbon pile can be adjusted to a desired closed circuit current. If the resistance of the resistors is significantly greater than the impedance across the arc, then changes in the arc impedance will be relatively insignificant and therefore will not cause any significant changes in the output current as long as the arc is maintained.

When it is desired to fusion bond a particular joint in accordance with the invention, it is first necessary to measure the size of the joint and assign it to the following quantities:

$M$=Mass of material that must be raised to the desired temperature;

$A_R$=Surface area of material that will be radiating power;

$A_C$=Cross-sectional area through which heat is conducted away from the joint material; and,

$L_{eff}$=Effective conduction length—i.e. the average length over which heat is conducted.

It is also necessary to determine the melting temperature $T_m$ of the brazed or weld material.

A ratio $\alpha$ of power conducted by the arc to total power losses at the anode attachment point is then determined, using the following formula:

$$\alpha=\frac{A_c\phi_M/L_{eff}}{A_R\,\varepsilon\,\sigma\,T_M{}^4+A_c\phi_M/L_{eff}}$$

$$\phi_M=\text{heat flux potential for material}=\int_{T_a}^{T_m} K\,dt;$$

$\varepsilon$=emissivity of material;

$\sigma$=Stefan-Boltzman constant for black-body radiation;

$T_a$=ambient temperature °K;

$T_m$=melting temperature of the material °K. If a brazing operation is to be performed $T_m$ is the melting temperature of the solder or braze material; and

$K$=thermal conductivity constant.

A non-dimensionalized temperature value $T_w$ for the values of $\alpha$ is computed by the following formula:

$$T_w=\int_o^N dx\,\frac{1}{(1-\alpha)(1-x^4)+\alpha(1-x)}$$

where N is the proportion of equilibrium temperature selected as a minimum working temperature. In the preferred embodiment, N is >0.8, representing 80% equilibrium temperature.

A heating time $t_w$ must be precisely controlled in cases where a minimum size of a fused joint is desired. The heating time $t_w$ during which current is to flow is calculated by the following formula:

$$t_w=\frac{\sum_i M_i(h_M)_i T_w}{A_R\,\varepsilon\,\alpha\,T_M{}^4+A_c\phi_M/L_{eff}}$$

where

$M_i$=mass of species, i; and,

$(h_M)_i$=enthalpy of species i, including heat of fusion where appropriate.

The required current value I, required to accommmplish the desired weld or braze is established in accordance with:

$$I=\frac{A_R\,\varepsilon\,\alpha\,T_M{}^4+A_c\phi M/L_{eff}}{\sigma\,V_I+\chi_w}\{(1-\alpha)(1-\tau\alpha^4)+\alpha(1-\tau\alpha)\},$$

where

$\sigma$=parameter (less than unity) defining a proportion of electron energy discharged at the anode attachment point of the work;

$V_I$=ionization potention of gas or vapor near attachment zone to work;
$\chi_w$=work function of work material; and,

$$\tau a = \frac{T_a}{T_M} \simeq \frac{300}{T_M} (°K),$$

The required ambient pressure level (atm) required to establish the desired surface area of arc attachment or heating is:

$$atm = \frac{p}{p_a} = \frac{kT_M}{p_a\, q_{ea}} \left[ \frac{27}{4} \frac{I}{\varepsilon_o\, V_I 3/2A_R} \sqrt{\frac{m}{2|e|}} \right]^{1/2}$$

where
k=Boltzmann constant;
p=pressure level;
$p_a$=atmospheric pressure;
$q_{ea}$=cross-section for atom-electron collisions;
$\varepsilon_o$=capacitivity of vacuum;
m=mass of the electron; and,
$|e|$=electric charge the electron.
This establishes the pressure, current and time required for a given weld.

The next steps are associated with choosing a cathode diameter $d_k$, such that the cathode is heated to value $T_k$, to ensure adequate thermionic emission from the tip of the cathode in a time $t_k$, much shorter than the time required to heat the work, $t_w$.

Put $\qquad\qquad\qquad\qquad t_k = \beta t_w,$

where
$\beta$=proportionality constant, less than unity. Using the values of electric current, I, and heating time, $t_w$, the cathode parameters are established using the following equations:

$$T_k/T_{eq} = \frac{(1+\gamma^4)^{1/4}\ \gamma exp\{(1+\gamma^4)\xi_k\}}{[1+\gamma^4 exp\{(1+\gamma^4)4\xi_k\}]^{1/4}}$$

where
$\gamma = T_a/T_{eq}$;
$\xi_k = t_k/t_{ref}$;
$T_a$=ambient temperature;

$$T_{eq} = \left( \frac{4I^2}{\pi^2 d_k^3} \frac{d\rho}{dT} \frac{1}{\sigma\dfrac{d\varepsilon}{dt}} \right)^{1/4};$$

$\rho$=resistivity of cathode;

$$= \frac{d\rho}{dT}\ T\ \text{(linearly dependent on the absolute temperature)};$$

$\sigma$=Stefan-Boltzmann constant for black body radiation;

$$t_{ref} = \left( \frac{\pi d_k^2}{4I} \right)^2 p_k\ \frac{C_p}{\dfrac{d\rho}{dT}};$$

$p_k$=density of cathode material; and,
$C_p$=specific heat of cathode material.
While the above calculations appear to be quite complex, the calculations would normally be

7

# 0 131 072

performed by a computer, with the formulae incorporated into an appropriate program. Alternatively, most of the information may be graphically reproduced, either on a computer display or on paper as shown in the following Examples, reference being made to the accompanying drawings.

Example 1

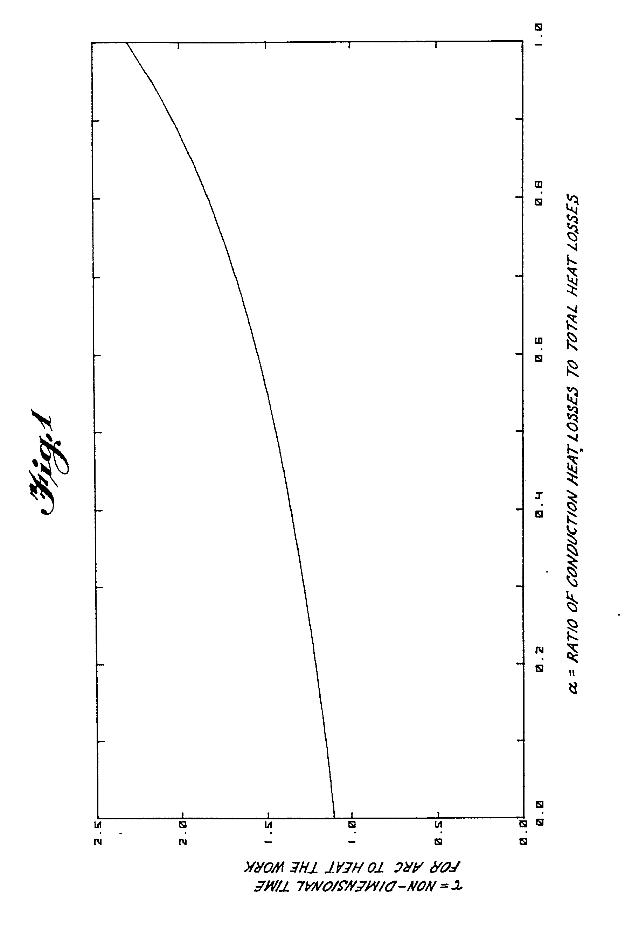

Figure 1 shows the relationship of $\tau_w$ to $\alpha$ for a particular material, with $N=0.9$ (90% equilibrium temperature). In this example, if $\alpha$ is established at 0.55, then $\tau_w$ could be read at 1.5, thus providing a value for $\tau_w$ without resorting to individual calculations.

Example 2

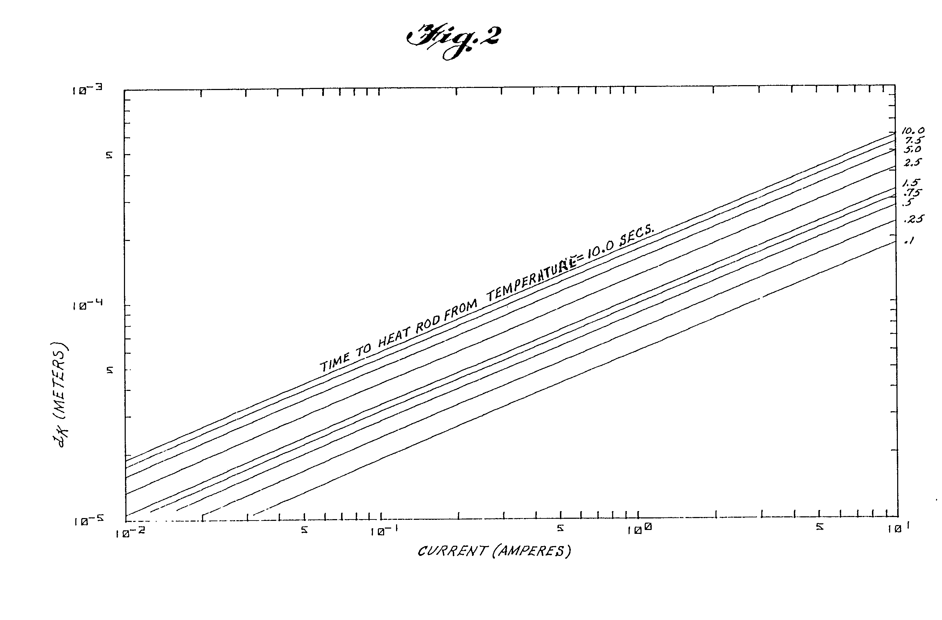

Figure 2 shows the relationships of cathode rod diameter $d_k$ and current at different times $t_k$ chosen for cathode heating. Choosing a small rod will reduce the time to heat the rod.

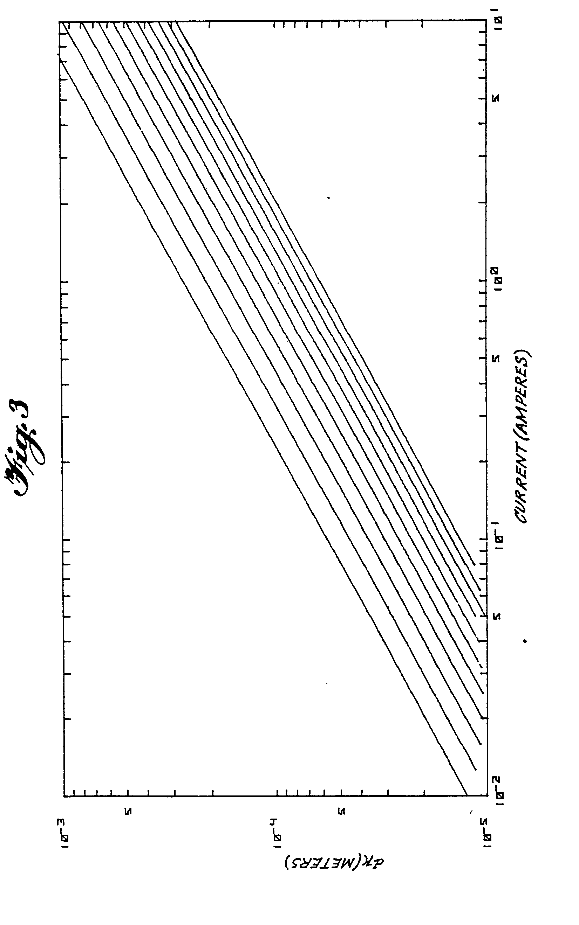

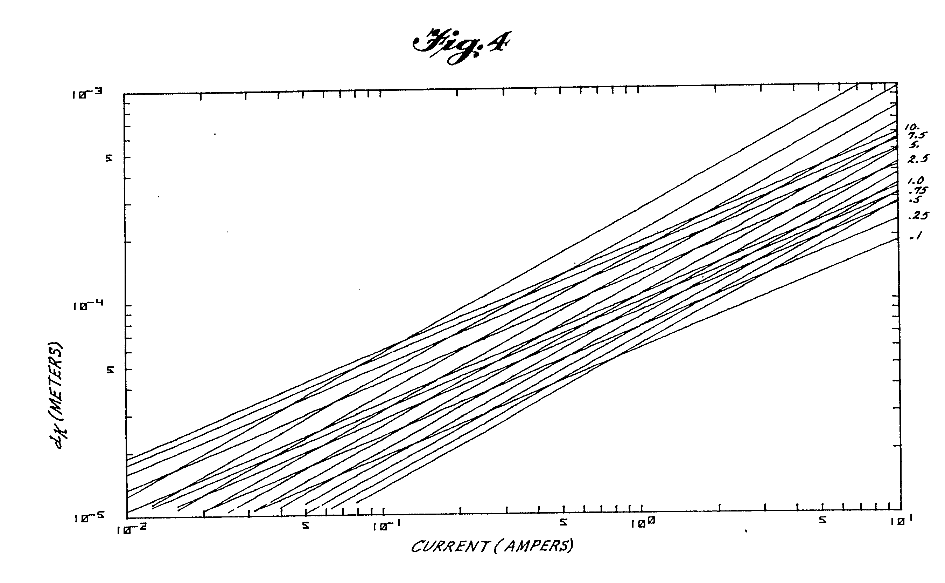

Figure 3 shows the relationships of cathode rod diameter $d_k$ and current at different rod temperatures $T_k$. $T_k$ must be less than the melting temperature of the rod, but sufficient to produce thermionic emission. Since clearly the rod temperature $T_k$ and the time to heat the rod $t_k$ are interrelated, both being dependent on rod diameter as a function of current, the values $T_k$ and $t_k$ may be shown on the same display, as seen in Figure 4.

If the values $t_k$ and $T_k$ cannot be chosen within acceptable limits and the choice of rod materials (e.g., tungsten) does not place the values $t_k$ and $T_k$ within acceptable limits, a different pressure is chosen, the change in pressure being effected either by vortex flow or by static pressure controls. The change in pressure results primarily in a different current value.

A radio frequency signal can be provided at the cathode, which would be transmitted to the work in order to cause localized heating and etch the surface of the work. The etching function is significant in that surface oxides can be removed by pre-treating the work with radio frequency, thereby performing a cleaning step during which the enveloping gas may be applied, if beneficial, as in the case of aluminium.

The localized heating function of the radio frequency energy enables a reduction in thermal stress caused by the arc fusion. A closely related function is the use of the radio frequency energy to heat treat metal, usually to "temper" the joint after fusion, by relieving molecular stress in the metal.

Typically radio frequency energy would be applied after the work is placed in a jig and the parameters (such as cathode diameter) have been established. The radio frequency energy at this point is primarily used for cleaning, although some pre-heating of the work advantageously occurs. The use of radio frequency for cleaning is also important in applications where the use of a flux would be undesirable.

By providing an electrode of a suitable material, a "tinning" capability is provided wherein, by including a DC component in the radio frequency current, the work is coated with some of the electrode material.

After arc fusion is effected, the radio frequency energy would be immediately applied to permit a slower cooling of the work, more even heat distribution during the cooling process and relief of molecular stresses at the joint. Thus, the heat treatment occurs when the joint remains hot from the arc fusion.

The following Examples are demonstrative of the application of the techniques of the present invention. These Examples appertain to an experimental program rather than to the application of the invention on a commercial scale; however, the Examples demonstrate some of the advantages and results of the invention:

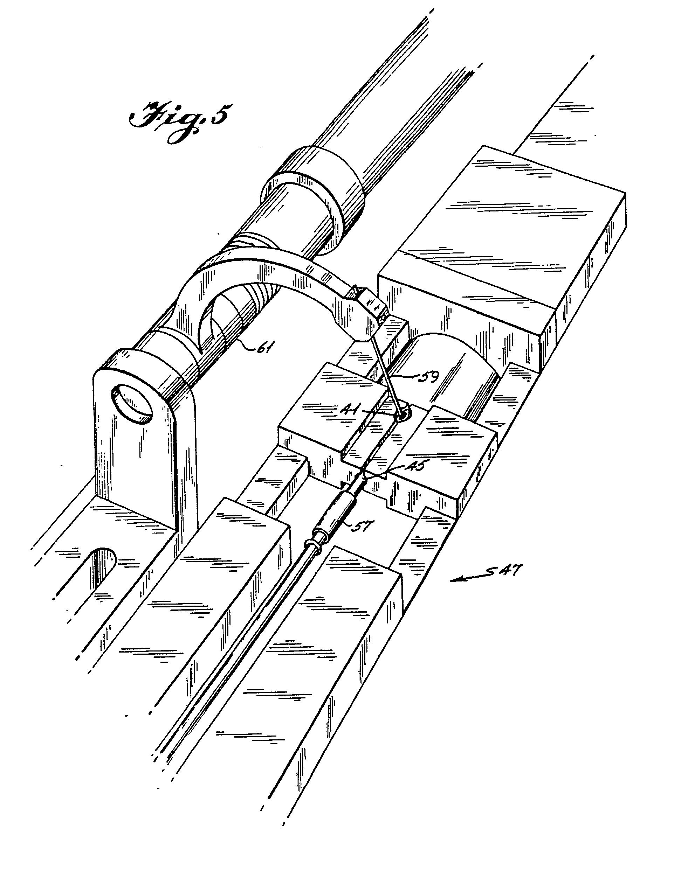

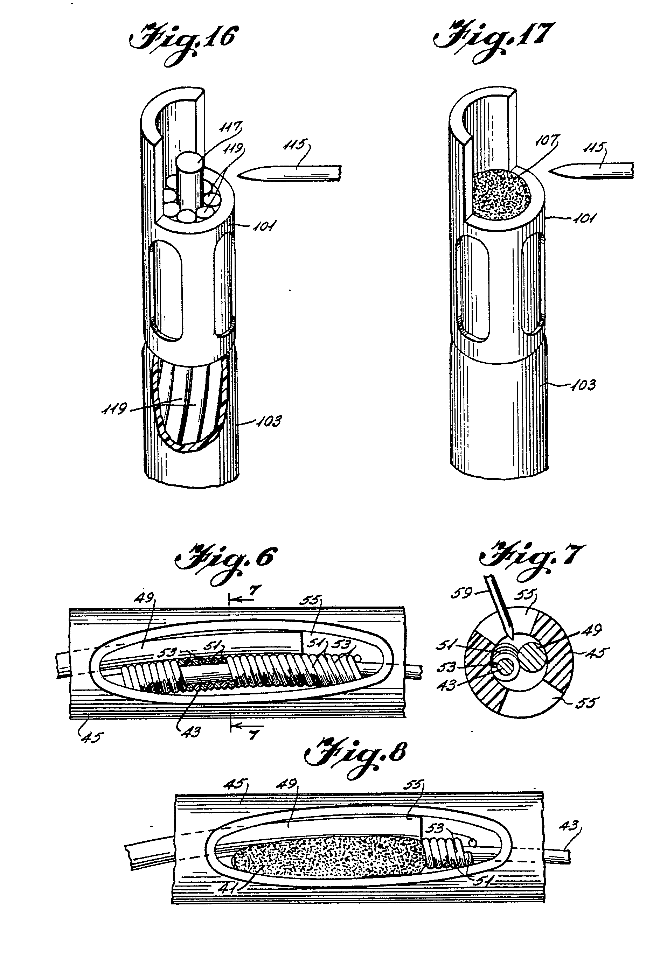

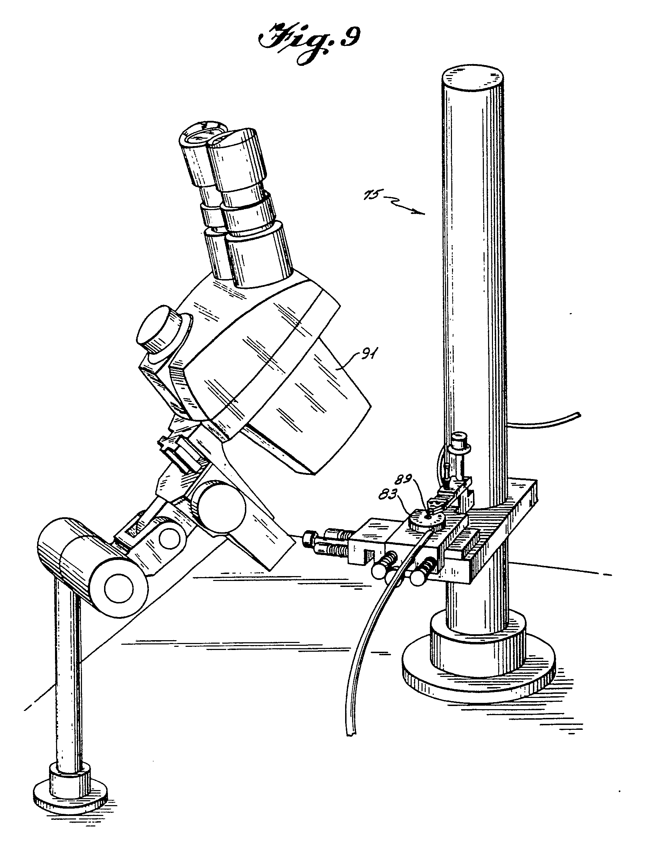

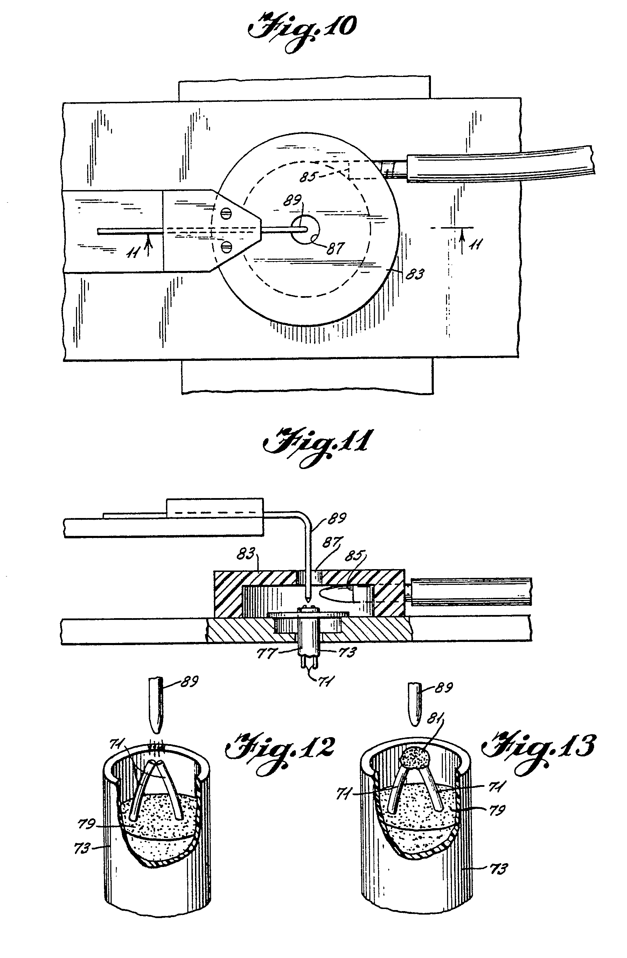

Example 3—High temperature joint 41 with a very small diameter wire 43 in an insulator 45 in a jig 47 (Figures 5—8).

A) Objective:

1) Hi-temperature braze together a .009″ (0.288 mm) diameter platinum wire 49 to a .0025″ (0.0635 mm) d W3Rh tungsten wire 43. The latter is wrapped with a .003″ (0.0762 mm) d W3Rh tungsten wire 51 and .003″ d Palco brazing wire 53. The wires are held in an insulating sheath 45 of diameter 1/6 inch (1.5 gmm) made of alumina, and having two slits 55 cut therein to allow access for the cathode 59. (Figure 7).

2) Use Palco Braze. Liquidus 1235°C or 2255°F
                     Solidus 1230°C or 2246°F

B) Constraints:

1) Must maintain electrical insulation between two holes;

2) Must maintain insulation of over 100 Meghoms between joint and a metal cylinder sleeve 57 (shown in Figure 5 on the sheath 45 but moved away from the holes 55) placed later over the alumina;

3) Cannot use flux for cleaning;

4) Joint 41 must carry 0.5 amp of current for over 100 hours at temperatures of over 800°C;

5) May open a slit 55 through alumina for access to joint, but must later cover with the metal cylinder 57;

6) Whole assembly cannot be heated to over 425°C.

C) Prior art alternative approaches to micro-arc that were tried:

Electron beam welding only. Electron beam welding produced joints with no better than 60% success rate. Problems included burned and cracked alumina; unsatisfactory braze even after several attempts;

8

burned-through tungsten wire 43; the Palco wire 53 forms a ball large enough to contact the metal cylinder 57 when the cylinder is placed over the sheath 45; and contaminated alumina walls in cavity, resulting in unacceptable resistance of the insulation. The resultant joints were considered non-reproducible, and therefore the electron beam is technically not feasible for this type of application on a commercial scale.

D) Application of micro-arc:

1) The jig 47 was constructed in a housing (not shown) which was evacuated and provided with an argon (95%; 5% hydrogen) enveloping gas at 800 torr, creating a vortex flow around the joint 41 and a cathode 59. The jig had a spring loaded rod holder 61, permitting a touching of electrodes to initiate the arc.

2) The technique was developed to the point where it has a 95% success rate, with one fusion attempt only. This was developed with several hundred samples. The procedure is automated, requiring no extensive special skills or expensive equipment. A technican must have experience of working with miniature components under a 5—10 power microscope.

3) Interwrap .003" (0.0762 mm) Palco wire 53 and wrapping wire 51:
—acts as heat sink to keep tungsten wire 4 at under 2250°F. (1232°C).
—give good spatial distribution of braze to ensure good joint.

4) Control discharge current to better than 5%.

5) Control time of discharge to better than 5%.

6) De-gas surfaces and then immerse in argon environment.

7) Used "optimum" cathode diameter.

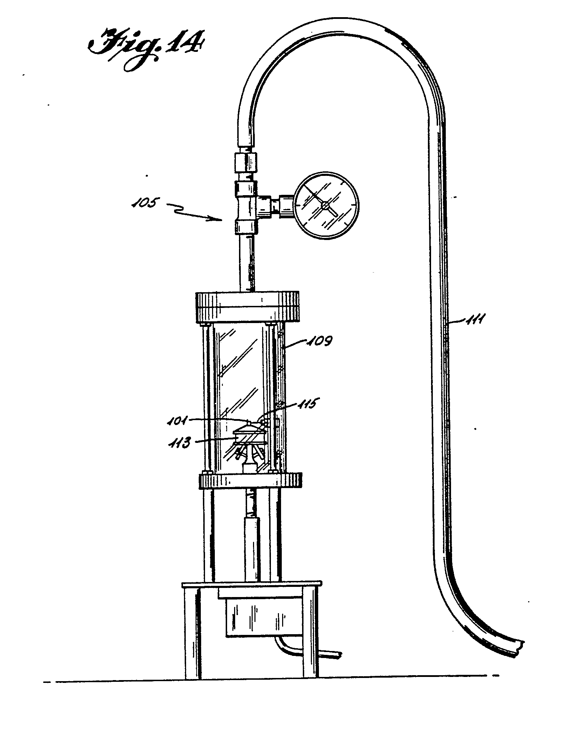

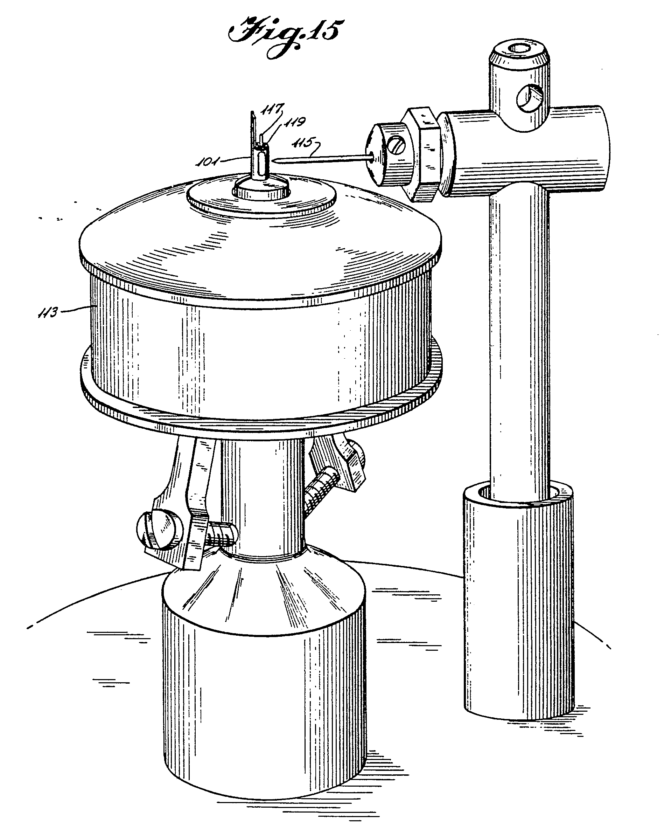

Example 4—Weld to very small diameter wires 71 encased in a sheath 73 using a jig 75 (Figures 9—13).
A) Objective:

Join together the two .003" d (0.0762 mm) Nichrome wires 71 at one end of a 60" (1524 mm) length of sheathed cable 77.

Sheath 73 O.D. is .019" (0.483 mm) and wires 71 embedded in magnesia 79.

B) Constraints:

1) Must maintain insulation resistance between sheath 73 and a joint 81 of over 100 Megohms.

2) The joint 81 must carry current of over 0.2 amps at temperature of over 1800°F (982°C) for period of over 100 hours.

3) Joint 81 must survive over 200 temperature cycles between 1800°F (982°C) and 100°F. (37.7°C)

4) Operating temperature near melting point of nichrome, hence must weld, rather than braze, wires 71 together.

C) Prior art alternative approach to mini-arc that was tried:

Parts sent out to work shop experienced in making such joints in sheathed thermocouples. Vendor would attempt to make welded joints.

Of the 10 joints required, 2 were made after many attempts. The remainder of sheath material was returned to us after 8 weeks and labelled defective. This is typical of this type of weld requirement in the industry.

D) Application of the micro-arc:

1) The site of the joint 81 was positioned in jig 75 surrounded by a vortex generator housing 83. An argon enveloping gas (95% argon; 5% hydrogen) was injected through a nozzle 85 into the housing 83, with the gas escaping through a cathode opening 87. The resulting vortex surrounded the end of the wires 71 and a cathode 89. A microscope 91 permitted accurate positioning of the cable 77 and the cathode 89 in the jig 75.

2) A technique was developed to the point where it has a 90% success rate with one or two attempts. This 90% success was demonstrated in tens of samples. The procedure is automated, requiring no special extensive skills or expensive equipment. A technician must have experience working with miniature components under a 5—10 power microscope.

3) Established reliable and reproducible arc discharge with current of ≈100 milliamperes.

4) Controlled arc current to better than 5% steady-state D.C. current.

5) Designed reliable method of making connections for carrying the return current through the wires.

6) Established and used "optimum" cathode diameter.

Example 5—Lug 101 on insulated wire 103 brazed without flux in jig 105 (Figures 14—17).
A) Objective:

1) Braze a stainless steel or nickel lug 101 to a No. 24 stranded insulated copper wire 103 which is nickel coated.

B) Constraints:

1) Brazed joint 107 must survive a temperature of up to 500°C.

**0 131 072**

2) Cannot use flux or chemical cleaning of parts because of possible contamination to adjacent components in lug assembly.

3) Joint 107 must carry 0.5 amperes of current for over 100 hours at temperature of up to 250°C.

C) Prior art alternative approaches to mini-arc that were tried:

None; all other approaches were not feasible.

D) Application of micro-arc:

1) The jig 105 was constructed to permit an evacuation and "purging" of a chamber 109. Lug 101 with the insulated wire 103 are mounted on anode amount 113, with a cathode 115 mounted at the side of the lug 101. A high temperature braze material 117 was "jammed" into the end of the wire 103, between strands 119 of the wire 103. Because of the localized heating, the braze material 117 could simply be one of the strands 119 which extends away from the other strands, with all strands 119 being of the same material.

2) A technique was developed to the point where it has a nearly 100% success rate with first fusion attempt after hundreds of welds. The procedure is automated, requiring no special skills or expensive equipment. A technician must have experience working with miniature components under 5—10 power microscope.

3) Developed electromagnetic method of cleaning surfaces using hi-frequency discharge in atmospheric pressure argon.

4) Developed unique method of supporting braze material in center of copper strands.

5) Adapted arc technique to work successfully with "low-temperature" gold-tin eutectic braze.

The results of Examples 3—5 can be seen in the following Table:

**0 131 072**

TABLE 1

| | Example 3 Braze platinum wire to tungsten wire | | Example 4 Weld together two nichrome wires | | Example 5 Braze nickel wire to copper wire | |
|---|---|---|---|---|---|---|
| | Range investigated | 'Best' value | Range investigated | 'Best' value | Range investigated | 'Best' value |
| Arc current (amps) | 2.0 to 0.5 | 1.20 | 0.5 to 0.1 | 0.18 | 2.0 to 0.5 | 1.20 |
| Open circuit and voltage (volts) | 40—80 | 67 | 400—500 | 480 | 40—80 | 67 |
| Series resistance (ohms) | 40—80 | 53 | 1000—4000 | 2660 | 40—80 | 53 |
| Time arc was on (sec) | .2 to 10 | 0.50 | .2 to 2.0 | 0.50 | 4—10 | 5—7 |
| Starting technique | — | touch electrodes | — | hi-freq. | — | hi-freq. |
| Cathode diameter (inches) | .005 to .020 | best value | .001 to .005 | best value | .005 to .020 | best value |
| Cathode material | | Thoriated tungsten | | Thoriated tungsten | | Thoriated tungsten |
| Cathode tip shape | flat to cone | 60° incl. cone | flat to cone | 60° incl. cone | flat to cone | 60° incl. cone |
| Cathode to work gap (inches) | .005 to .025 | .012″ | | 0 to .050″ | .005 to .025 | .010″ |
| Ambient gas | | argon | | argon | | argon |
| Environment control | | evacuate 24 to 40 mm pressure; fill with argon to 800 mm | | blow gas over work | | "purge" chamber for 5 min. |

While specific examples have been used in order to demonstrate the application of the present invention, it is anticipated that various arrangements may be provided without departing from the scope of the present invention. For example, it is anticipated that the techniques of this invention may be used to fuse metals to non-metals. Accordingly, the present invention should be taken as defined in the claims and not limited in scope to the specific examples described.

**Claims**

1. A method for welding a material at an anode junction with an arc from a cathode rod so that at least some of the material is melted and flows together to form a unified weld, comprising the steps of
   (a) determining an effective size of the portion of the material which is to be heated to a desired temperature during the heating, by measurement of the quantities $M$, $A_r$, $A_c$ and $L_{eff}$;
   $M$ = mass of material that must be raised to the desired temperature;
   $A_R$ = surface area of material that will be radiating power;
   $A_C$ = cross-sectional area through which heat is conducted away from the joint material; and

11

$L_{eff}$=effective conduction length, namely the average length over which heat is conducted;

(b) determining the current level necessary to heat the material to the desired temperature over said effective size of the joint at a desired gas pressure range, said current level being determined through calculation of the formula

$$I = \frac{A_R \varepsilon \alpha T_M^4 + A_c \phi [M/L_{eff}]}{\delta V_I + X_w}(1-\alpha)(1-\tau\alpha^4)+\alpha(1-\tau\alpha),$$

wherein:

I=the current level;

$\varepsilon$=emissivity of the material;

$\alpha$=the ratio of power conducted by the arc to total power losses at an attachment point of said anode juncture;

$T_M$=cross-sectional area through which heat is conducted away from the joint material;

$\phi$=heat flux potential for the material;

$\tau\alpha=Ta/T_M$ where Ta=ambient temperature in °K;

$\delta$=parameter defining a proportion of electron energy discharged at the anode attachment point of said material;

$V_I$=ionisation potential of gas or vapor near said attachment point; and

$X_w$=work function of work material, that is energy absorbed by electrons upon entering the material;

(c) maintaining said current level within the range of 10 milliamps to 10 amps;

(d) determining a pressure level within said gas pressure range necessary to maintain a stable arc at the determined current level and obtain the desired penetration of the weld by calculation of the formula:

$$atm = \frac{P}{Pa} = \frac{kT_M}{Pa\, q_{ea}}\left[\frac{27}{4}\frac{I}{\varepsilon_0 V_I 3/2A_R}\sqrt{\frac{m}{2|e|}}\right]^{1/2}$$

wherein:

atm=atmospheres of pressure; (1 atm=1.01325×10^5 Pa)

K=Boltzmann constant;

P=pressure level;

Pa=atmospheric pressure;

$q_{ea}$=cross-section for atom-electron collisions;

$\varepsilon_0$=capacitivity of vacuum;

m=mass of one electron; and

$|e|$=electron charge of the electron;

(e) determining a time $t_w$ for which the current must flow in order to heat the material at the effective size of said portion to obtain the desired temperature by calculation of the formula:

$$t_w = \frac{\sum_i M_i (h_M)_i \tau_w}{A_R \varepsilon \alpha T_M^4 + A_c \phi [M/L_{eff}]}$$

wherein:

$M_i$=mass of species, i; and

$(h)_i$=enthalpy of species i, including heat of fusion where appropriate;

(f) determining a cathode temperature $T_w$ necessary to maintain thermionic emmision through calculation of the formula:

$$T_w = \int_o^N dx\, \frac{1}{(1-\alpha)(1-x^4)+\alpha(1-x)}$$

where N is the proportion of equilibrium temperature selected as a minimum working temperature;

(g) determining a diameter $d_k$ of the cathode rod necessary to maintain the cathode temperature $T_k$ at said value, said diameter being determined by repeated calculation of the formula:

$$T_k/T_{eq}=\frac{(1+\gamma^4)^{1/4}\gamma\ \exp\{(1+\gamma^4)\xi_k\}}{[1+\gamma^4\ \exp\{(1+\gamma^4)4\xi_k\}]^{1/4}}$$

where

$\gamma=T_a/T_{eq}$;

$\xi_k=t_k/t_{ref}$;

$T_a$=ambient temperature;

$$T_{eq}=\left[\frac{4l^2}{\pi^2d_k^3}\ \frac{d\rho}{dT}\ \frac{1}{\sigma\dfrac{d\varepsilon}{dT}}\right]^{1/4};$$

$\rho$=resistivity of cathode;

$=\dfrac{d\rho}{dT}\ T$ (linearly dependent on the absolute temperature);

$\sigma$=Stefen-Boltzmann constant for black body radiation;

$$t_{ref}=\left[\frac{\pi d_k^2}{4l}\right]^2 p_k\ \frac{C_p}{\dfrac{d\rho}{dT}}$$

$p_k$=density of cathode material; and

$C_p$=specific heat of cathode material;

(h) positioning the material to be heated in a jig so that the portion of the material which is to be elevated to the desired temperature is in close proximity to a cathode of the determined diameter;

(i) establishing the determined pressure of gas at the portion of the material which is to be elevated to the desired temperature;

(j) applying electrical potential across the cathode and the material to be heated to the desired temperature so that the desired current flows through the cathode for a desired amount of time, the current flowing in an arc between the cathode and the material which is to be heated to the desired temperature; and

(k) maintaining the current flowing through the cathode in a stable condition.

2. A method as claimed in Claim 1, wherein the arc is initiated (a) by impressing radio frequency current across the material to be heated to the desired temperature and the cathode, or (b) by bringing the cathode into close proximity with the material to be heated to the desired temperature, or (c) by providing the initial high voltage between the cathode and the material to be heated to the desired temperature.

3. A method as claimed in Claim 1 or 2, wherein the work is enveloped with a gas, the majority of which is inert and which preferably comprises at least 80% inert components, and at least 95% of the gas has inert or reducing properties.

4. A method as claimed in any preceding claim, wherein a gas flow is established around the material to be heated so as to create a vortex adjacent the material to be heated, and wherein the enveloping gas is caused to flow adjacent to the material to be heated in the vortex which surrounds the arc, the enveloping gas flow carrying vaporized material away from the material to be heated to the desired temperature.

5. A method as claimed in Claim 4, wherein a portion of the enveloping gas in the vortex is caused to flow at speeds close to MACH 1.

6. A method as claimed in any preceding claim, wherein welding or soldering is effected by heating of the material, and said soldering may effect a brazed joint.

7. A method as claimed in any preceding claim, wherein current having a radio frequency is applied through the cathode to the material to treat the material.

8. A method as claimed in Claim 7, wherein the radio frequency current is used to clean the material to be heated or is used to thermally treat the material.

9. A method as claimed in any preceding claim, wherein a cathode rod diameter is selected which is greater than 0.010 mm (0.004 inches) and less than 0.228 mm (0.009 inches).

**Patentansprüche**

1. Verfahren zum Schweißen eines Materials an einer Anodenverbindung mit einem Bogen von einer Stabkathode derart, daß schließlich etwas Material geschmolzen wird und zusammenfließt, um eine Verbindungsnaht zu erhalten, bestehend durch folgende Schritte:

**0 131 072**

(a) Bestimmung einer effektiven Größe des Materialanteils, der während der Erhitzung auf eine gewünschte Temperatur zu bringen ist, durch Messung der Größen M, $A_r$, $A_c$, $L_{eff}$, mit

M=Materialmasse, die auf die gewünschte Temperatur zu bringen ist;

$A_R$=Flächengebiet von Material, das Strahlungsenergie besitzt;

$A_c$=Querschnittsgebiet, durch welches Wärme von dem verbundenen Material abgeleitet wird; und

$L_{eff}$=effektive Ableitungslänge, nämlich die Durchschnittslänge, über die Hitze abgeleitet wird;

(b) Bestimmung der Stromstärke, welche notwendig ist, um das Material auf die gewünschte Temperatur über besagte effektive Größe der Verbindung bei einem gewünschten Gasdruckbereich zu erhitzen, wobei sich die Stromstärke durch Berechnung der Formel

$$I=\frac{A_R\,\varepsilon\,\alpha\,T_M{}^4+A_c\phi[M/L_{eff}]}{\delta\,V_I+X_w}(1-\alpha)(1-\tau\alpha^4)+\alpha(1-\tau\alpha)$$

bestimmen läßt, mit

I=Stromstärke;

$\varepsilon$=Emissionsvermögen des Materials;

$\alpha$=das Verhältnis von durch den Bogen zugeführte Energie zu Gesamtenergieverlusten an einem Befestigungspunkt der Anodenverbindungsstelle;

$T_M$=Querschnittsgebiet, durch welches Wärme von dem verbundenen Material abgeleitet wird;

$\phi$=Wärmestrompotential für das Material;

$\tau\alpha=Ta/T_M$, worin Ta für die Umgebungstemperatur in °K steht;

$\delta$=Parameter zur Bestimmung eines Anteils von an dem Anodenbefestigungspunkt des Materials entladener Elektronenenergie;

$V_I$=Ionisierungsenergie von Gas oder Dampf in der Nähe des Befestigungspunktes;

$X_w$=Austrittsarbeit des Arbeitsmaterials, d.h. durch Elektronen nach Eindringen in das Material aufgenommene Energie;

(c) Aufrechterhaltung der Stromstärke innerhalb des Bereiches von 10 Milliampere bis 10 Ampere;

(d) Bestimmung eines Druckniveaus innerhalb des Gasdruckbereiches, welcher notwendig ist, um einen stabilen Bogen bei der vorbestimmten Stromstärke aufrechtzuerhalten und um die gewünschte Durchdringung der Naht mittels Berechnung nach der Formel

$$atm=\frac{P}{Pa}=\frac{kT_M}{Pa\,q_{ea}}\left[\frac{27}{4}\quad\frac{I}{\varepsilon_0\,V_I{}^{3/2}A_R}\sqrt{\frac{m}{2\,|e|}}\right]^{1/2}$$

zu erhalten, mit

atm=Druckatmosphären (1 atm=$1{,}01325\times10^5$Pa);

K=Boltzmannkonstante;

P=Druckniveau;

Pa=atmosphärischer Druck;

$q_{ea}$=Durchschnitt von Atomelektronen-Zusammenstößen;

$\varepsilon_0$=Dielektrizitätskonstante von Vakuum;

m=Masse eine Elektrons; und

$|e|$=Elektronenbeladung des Elektrons;

(e) Bestimmung einer Zeit $t_w$, in der der Strom fließen muß, um das Material an der effektiven Größe des besagten Bereiches entsprechend zu erhitzen, um die gewünschte Temperatur mittels Berechnung der Formel

$$t_w=\frac{\sum_i M_I(h_M)_i\tau_w}{A_R\,\varepsilon\,\alpha\,T_M{}^4+A_c\phi[M/L_{eff}]}$$

zu erhalten, mit

$M_i$=Masse der Elemente i; und

$(h)_i$=Enthalpie der Elemente i, die Schmelzwärme, wo geeignet, mit inbegriffen;

(f) Bestimmung einer Kathodentemperatur $T_w$, welche notwendig ist, um eine glühelektrische Emission nach Berechnung der Formel

$$T_w=\int_o^N dx\,\frac{1}{(1-\alpha)(1-x^4)+\alpha(1-x)}$$

beizubehalten, worin N für den Anteil der Umwandlungstemperatur steht, die als eine minimale Arbeitstemperatur ausgewählt ist;

14

**0 131 072**

(g) Bestimmung eines Durchmessers $d_k$ des Kathodenstabes, der notwendig ist, um die Kathodentemperatur $T_k$ auf dem besagten Wert zu halten, wobei sich der Durchmesser durch wiederholte Berechnung der Formel

$$T_k/T_{eq} = \frac{(1+\gamma^4)^{1/4}\gamma \ \exp\{(1+\gamma^4)\xi_k\}}{[1+\gamma^4 \ \exp\{(1+\gamma^4)4\xi_k\}]^{1/4}}$$

bestimmen läßt mit

$\gamma = T_a/T_{eq}$;
$\xi_k = t_k/T_{ref}$;
$T_a = $ Umgebungstemperatur;

$$T_{eq} = \left[ \frac{4l^2}{\pi^2 d_k{}^3} \ \frac{d\rho}{dT} \ \frac{1}{\sigma \dfrac{d\varepsilon}{dT}} \right]^{1/4};$$

$\rho = $ spezifischer Widerstand der Kathode;

$= \dfrac{d\rho}{dT} \ T$ (linear abhängig von der Absoluttemperatur);

$\sigma = $ Stefan-Boltzmann-Konstante für Hohlraumstrahlung;

$$t_{ref} = \left[ \frac{\pi d_k{}^2}{4l} \right]^2 \rho_k \ \frac{C_p}{\dfrac{d\rho}{dT}};$$

$\rho_k = $ spezifisches Gewicht des Kathodenmaterials;
$C_p = $ spezifische Wärme des Kathodenmaterials;

(h) Positionierung des zu erhitzenden Materials in einer Einspannvorrichtung derart, daß sich der Bereich des Materials, der auf die gewünschte Temperatur zu bringen ist, in geringer Entfernung zu einer Kathode bestimmten Durchmessers befindet;

(i) Errichtung eines bestimmten Gasdruckes im Bereich des Materials, welches auf die gewünschte Temperatur anzuheben ist;

(j) Anlegen eines elektrischen Potentials über die Kathode und das auf die gewünschte Temperatur zu erhitzende Material, so daß der gewünschte Strom durch die Kathode für einen gewünschten Zeitraum fließt, wobei der Strom in einem Bogen zwischen der Kathode und dem auf die gewünschte Temperatur zu erhitzenden Material fließt; und

(k) konstante Aufrechterhaltung des durch die Kathode fließenden Stromes.

2. Ein Verfahren nach Anspruch 1, dadurch gekennzeichnet, daß der Bogen verursacht ist (a) durch Aufbringen von Hochfrequenzstrom auf das auf die gewünschte Temperatur zu erhitzende Material und die Kathode, oder (b) durch Beabstandung der Kathode in geringer Entfernung zu dem auf die gewünschte Temperatur zu erhitzenden Materials, oder (c) durch Vorsehen der anfänglichen Hochspannung zwischen der Kathode und dem auf die gewünschte Temperatur zu erhitzenden Material.

3. Ein Verfahren nach Anspruch 1 oder 2, dadurch gekennzeichnet, daß die Arbeit mit einem Gas umhüllt ist, wobei der überwiegende Teil dessen aus inerten Gas besteht, das vorzugsweise zu mindestens 80% aus inerten Komponenten besteht, und mindestens 95% inerte oder reduzierende Eigenschaften aufweist.

4. Ein Verfahren nach einem der vorhergehenden Ansprüche, dadurch gekennzeichnet, daß ein Gasstrom um das zu erhitzende Material derart aufgebaut ist, daß ein dem zu erhitzenden Material anliegender Wirbel entsteht, und daß das umhüllende Gas gezwungen ist, über das zu erhitzende Material anliegend in dem Wirbel zu strömen, der den Bogen umgibt, wobei der umhüllende Gasstrom verdampftes Material von dem auf eine gewünschte Temperatur zu erhitzenden Material entfernt.

5. Ein Verfahren nach Anspruch 4, dadurch gekennzeichnet, daß ein Teil des umhüllenden Gases in dem Wirbel bei Geschwindigkeiten nahe von MACH 1 strömt.

6. Ein Verfahren nach einem der vorhergehenden Ansprüche, dadurch gekennzeichnet, daß das Schmelzen oder Löten durch Erhitzen des Materials bewirkt wird, und das Löten eine Hartlötverbindung ergibt.

7. Ein Verfahren nach einem der vorhergehenden Ansprüchet, dadurch gekennzeichnet, daß ein Hochfrequenzstrom durch die Kathode zu dem Material geführt wird, um dieses zu behandeln.

15

**0 131 072**

8. Ein Verfahren nach Anspruch 7, dadurch gekennzeichnet, daß der Hochfrequenzstrom dazu verwendet wird, das zu erhitzende Material zu reinigen oder das Material thermisch zu behandeln.

9. Ein Verfahren nach einem der vorhergehenden Ansprüche, dadurch gekennzeichnet, daß ein Durchmesser des Kathodenstabes verwendet wird, der größer als 0,01 mm (0,0004 Inch) und kleiner als 0,228 mm (0,009 Inch) ist.

**Revendications**

1. Méthode pour souder un matériau au niveau d'une jonction d'anode avec un arc provenant d'une barre cathode de façon qu'au moins une partie du matériau soit fondue et s'écoule pour former une soudure unitaire, comportant les stades suivants:

a) déterminer une dimension effective de la portion du matériau à chauffer à une température désirée lors du chauffage, en mesurant les quantités M, $A_r$, $A_c$ et $L_{eff}$;

M=masse du matériau qui doit être portée à la température désirée;

$A_r$=surface du matériau qui rayonnera de l'énergie;

$A_c$=surface en section transversale à travers laquelle la chaleur est évacuée du matériau du joint; et

$L_{eff}$=longueur de conduction effective, à savoir longueur moyenne sur laquelle la chaleur est conduite;

b) déterminer la vapeur d'intensité nécessaire pour chauffer le matériau à la température désirée sur la dimension effective du joint dans une gamme de pressions gazeuses désirée, cette valeur d'intensité étant déterminée par le calcul de la formule:

$$I = \frac{A_R \varepsilon \alpha T_M^4 + A_c \phi [M/L_{eff}]}{\delta V_I + X_w} (1-\alpha)(1-\tau\alpha^4) + \alpha(1-\tau\alpha),$$

dans laquelle:

I=valeur de l'intensité;

$\varepsilon$=émittance du matériau;

$\alpha$=rapport de la puissance conduite par l'arc aux pertes de puissance totales au niveau d'un point d'attache de la jonction d'anode;

$T_M$=surface en section transversale à travers laquelle la chaleur est évacuée du matériau du joint;

$\phi$=potentiel de flux thermique pour le matériau;

$\tau\alpha = T_a/T_M$, où $T_a$=température ambiante en °K;

$\delta$=paramètre définissant une proportion d'énergie d'électron déchargée au niveau du point d'attache de l'anode de ce matériau;

$V_I$=potentiel d'ionisation du gaz ou de la vapeur au voisinage de ce point d'attache; et

$X_w$=fonction de travail du matériau des pièces à souder, c'est-à-dire énergie absorbée par les électrons lorsqu'ils pénètrent dans le matériau;

c) maintenir cette valeur d'intensité à l'intérieur de la plage de 10 milliampères à 10 ampères;

d) déterminer une valeur de pression à l'intérieur de la plage de pressions gazeuses nécessaire pour maintenir un arc stable pour cette valeur d'intensité déterminée et obtenir la pénétration désirée de la soudure en calculant la formule:

$$atm = \frac{P}{Pa} = \frac{kT_M}{Pa\, q_{ea}} \left[ \frac{27}{4} \frac{I}{\varepsilon_0 V_I 3/2 A_R} \sqrt{\frac{m}{2|e|}} \right]^{1/2}$$

dans laquelle:

atm=pression (en atmosphères) (1 atm=1,01325×10⁵ Pa)

K=constante de Boltzmann;

P=valeur de la pression;

Pa=pression atmosphérique;

$q_{ea}$=section transversale pour des collisions entre atomes et électrons;

$\varepsilon_0$=valeur capacitive du vide;

m=masse d'un électron; et

$|e|$=charge de l'électron;

e) déterminer une durée $t_w$ pendant laquelle le courant doit passer afin de chauffer le matériau au niveau de la dimension effective de cette portion pour obtenir la température désirée par calcul de la formule:

$$t_w = \frac{\sum_i M_i (h_M)_i \tau_w}{A_R \varepsilon \alpha T_M^4 + A_c \phi [M/L_{eff}]}$$

dans laquelle:

16

$M_i$=masse de l'espèce, i; et

$(h)i$=enthalpie de l'espèce i, y compris la chaleur de fusion lorsque c'est nécessaire;

f) déterminer une température de cathode $T_w$ nécessaire pour maintenir l'émission thermionique par le calcul de la formule:

$$T_w = \int_{0}^{N} dx \frac{1}{(1-a)(1-x^4)+a(1-x)}$$

dans laquelle N est la proportion de la température d'équilibre sélectionnée comme température de travail minimale;

g) déterminer un diamètre $d_k$ de la barre de cathode nécessaire pour maintenir la température $T_k$ à cette valeur, ce diamètre étant déterminé par le calcul itératif de la formule:

$$T_k/T_{eq} = \frac{(1+\gamma^4)^{1/4}\gamma \ \exp\{(1+\gamma^4)\xi_k\}}{[1+\gamma^4 \ \exp\{(1+\gamma^4)4\xi_k\}]^{1/4}}$$

dans laquelle:

$\gamma = T_a/T_{eq}$;

$\xi_k = t_k/t_{ref}$;

$T_a$=température ambiante;

$$T_{eq} = \left[ \frac{4l^2}{\pi^2 d_k^3} \ \frac{d\rho}{dT} \ \frac{1}{\sigma\dfrac{d\varepsilon}{dT}} \right]^{1/4};$$

$\rho$=résistivité de la cathode;

$=\dfrac{d\rho}{dT}$ T (fonction linéaire de la température absolue);

$\sigma$=constante de Stefan-Boltzmann pour le rayonnement du corps noir;

$$t_{ref} = \left[ \frac{\pi d_k^2}{4l} \right]^2 \rho_k \ \frac{C_p}{\dfrac{d\rho}{dT}}$$

$\rho_k$=densité du matériau de la cathode; et

$C_p$=chaleur spécifique du matériau de la cathode;

h) positionner le matériau à chauffer dans un outillage de façon que la portion du matériau qui doit être portée à la température désirée soit à proximité immédiate d'une cathode du diamète déterminé;

i) établir la pression déterminée de gaz au nivau de la portion du matériau qui doit être portée à la température désirée;

j) appliquer un potentiel électrique en travers de la cathode et du matériau à chauffer à la température désirée de façon que le courant désiré circule à travers la cathode pendant une durée désirée, le courant s'écoulant en un arc entre la cathode et le matériau à chauffer à la température désirée; et

k) maintenir la circulation du courant à travers la cathode dans un état stable.

2. Méthode selon la revendication 1, dans laquelle l'arc est déclenché (a) en appliquant un courant haute fréquence en travers du matériau à porter à la température désirée et la cathode, ou, (b) en amenant la cathode à proximité immédiate du matériau à porter à la température désirée, ou (c) en établissant la haute tension initiale entre la cathode et le matériau à porter à la température désirée.

3. Méthode selon la revendication 1 ou 2, dans laquelle la pièce est enveloppée par un gaz, dont la majorité est inerte et qui comprend de préférence au moins 80% de composants inertes, et dans laquelle au moins 95% du gaz a des propriétés inertes ou réductrices.

4. Méthode selon l'une quelconque des revendications précédentes, dans laquelle ou établit un courant gazeux autour du matériau à chauffer, de façon à créer un tourbillon adjacent au matériau à chauffer, et dans laquelle le gaz de couverture est amené à circuler adjacent au matériau à chauffer dans le tourbillon qui entoure l'arc, le courant de gaz de couverture emportant le matériau vaporisé loin du matériau à porter à la température désirée.

5. Méthode selon la revendication 4, dans laquelle une portion du gaz de couverture dans le tourbillon est amenée à circuler à des vitesses voisines de MACH 1.

## 0 131 072

6. Méthode selon l'une quelconque des revendications précédentes, dans laquelle le soudage ou le brasage est effectué en chauffant le matériau et dans laquelle le brasage peut réaliser un joint brasé.

7. Méthode selon l'une quelconque des revendications précédentes, dans laquelle le courant haute fréquence est appliqué à travers la cathode sur le matériau pour traiter celui-ci.

8. Méthode selon la revendication 7, dans laquelle le courant haute fréquence est utilisé pour nettoyer le matériau à chauffer ou est utilisé pour traiter thermiquement le matériau.

9. Méthode selon l'une quelconque des revendications précédentes, dans laquelle on choisit un diamètre de barre de cathode supérieur à 0,010 mm et inférieur à 0,228 mm.

Fig.1

Fig. 2

TIME TO HEAT ROD FROM TEMPERATURE = 10.0 SECS.

10.0
7.5
5.0
2.5
1.5
.75
.5
.25
.1

CURRENT (AMPERES)

dR (METERS)

Fig. 3

CURRENT (AMPERES)

dx (METERS)

Fig.4

0 131 072

*Fig.5*

*Fig.16*

*Fig.17*

*Fig.6*

*Fig.7*

*Fig.8*

*Fig.9*

*Fig.10*

*Fig.11*

*Fig.12*

*Fig.13*

Fig.14

_Fig.15_